# EUROPEAN PATENT APPLICATION

(11) **EP 0 785 243 A2**
(43) Date of publication of application: **23.07.1997**
(21) Application number: 97300287.6
(22) Date of filing: 17.01.1997
(51) Int. Cl.: C09J 4/00

(54) **A method of sealing two abutting surfaces in face-to-face contact**

(30) Priority: 18.01.1996 IR 96004296
(71) Applicant: LOCTITE (IRELAND) LIMITED, Dublin 24 (IE)
(72) Inventor: Wrobel, Peter, Templeogue, Dublin 16 (IE); Houlihan, James, Kilrush, CO, Clare (IE)
(74) Representative: Marchant, James Ian

(57) **Abstract**

A method of sealing two abutting metal surfaces such as flanges in face-to-face contact, particularly for use on production lines in the motor industry. The method comprises the steps of:
(i) applying to at least one of the surfaces a sealing composition containing ingredients of a fast-curing anaerobic sealant comprising:
   (a) an anaerobically polymerizable liquid monomer selected from acrylate and methacrylate ester monomers,
   (b) a primary initiator of free-radical polymerization, and
   (c) an accelerator combined with a secondary initiator of polymerization,
   at least one of the primary initiator (b) and the accelerator/secondary initiator combination (c) being isolated from the monomer by microencapsulation in microcapsules having walls capable of withstanding a low load but rupturable under a high load,
(ii) bringing the surfaces into abutting relationship under a low load (e.g. less than about 0.1 kg/cm²) which does not rupture the microcapsules, the sealing composition being in contact with both metal surfaces under conditions such that a rapid anaerobic cure would be initiated if one of the ingredients (b) or (c) was not microencapsulated,
(iii) making any desired adjustments in the relationship between the two surfaces, and, if desired, holding the two surfaces in the abutting relationship,
(iv) applying high load pressure forces (e.g. greater than about 3.0 kg/cm²) to bring the surfaces together and to rupture the microcapsules, thus achieving a rapid cure of the composition.

The microcapsules have an average diameter in the range 20-100 micrometres and the microcapsule walls may be of urea/formaldehyde resin.

## Description

### Background of the Invention

### a) Field of the Invention

This invention relates to a method of sealing two abutting metal surfaces in face-to-face contact. It is particularly intended for sealing flat surfaces, such as on flanges, under pressure forces, for example on production lines in the motor industry. The metal surfaces include particularly steel, cast iron, aluminium and alloys thereof.

Anaerobic adhesives which cure in the substantial absence of air or oxygen are well known. Anaerobic flange sealants offer fast curing and sealing characteristics when placed between metal flanges under metal-to-metal contact situations. In such situations fast curing anaerobic compositions will show signs of polymerisation in minutes (e.g. less than 8 minutes) even when there is virtually no load on the bond.

Normally this is not a problem on a production line. However there are circumstances when it is desirable to be able to adjust two lightly assembled components after a substantial period of holding time and then to have a fast cure. With current fast curing anaerobics this is not possible as even slight polymerisation during the holding period will cause a shim of cured solid material, affecting the integrity of the piece on final cure.

### b) Description of the prior art

Preapplied adhesive compositions with one or more encapsulated ingredients are known, particularly for thread-locking e.g U.S. Patent 4,417,028 Azevedo which describes compositions comprising: (a) a polymerizable monomer; (b) an initiator; and (c) an accelerator of polymerization; and (d) a binder, wherein the binder is a specified copolymer and is soluble in water. The Azevedo patent states that in a two-part adhesive composition, the free-radical initiator would be encapsulated in a suitable shell and would constitute one part, while the remaining essential ingredients, the monomer, binder, and accelerator, would constitute the second part. The microcapsule shell wall is preferably composed of a urea formaldehyde composition. The initiator-filled microcapsule would be added to the first part containing the monomer, accelerator and binder prior to deposition on a part. However the Examples do not describe addition of a microencapsulated initiator to the exemplary compositions. Preapplied adhesive compositions are intended to be left on a component for long periods of time prior to assembly with a second component. Azevedo states that his compositions are most useful as films applied to threaded articles such as fasteners, but other uses such as gasketing or bonding are contemplated. The abstract indicates that the coating can be deposited onto parts such as nuts and bolts, slip-fitted tubing, or flanges. However Azevedo is primarily concerned with the use of the compositions on threaded components such as nuts and bolts, which are assembled by relative rotation of the two components and the composition is subjected to shear forces. There is no teaching concerning the assembly of flat surfaces under pressure forces and the need for adjustment of those surfaces after they have both been brought into contact with the composition and maintained in face-to-face contact for a holding period.

U.S. Patent 4,154,774 Hinterwaldner describes compositions in which one or all of the components can be in protected sheaths or microencapsulated to prevent hardening of the composition until rupture thereof. A wide range of uses is suggested and it is suggested that surfaces can be precoated with the adhesive and coating materials and only activated at a later time by pressure, shear, rotational and/or horizontal forces. However there is no teaching about the problem underlying the present invention and the characteristics of the sheaths or microcapsules are not discussed. The compositions are not anaerobic compositions.

U.S. Patent 4,101,501 Hinterwaldner also describes an adhesive composition in which one or more components is encased in a protective casing. The text at column 8 lines 24-26 suggests that with the adhesive of that patent such components as flanges can be bonded and sealed. The composition also includes a casing rupturing agent composed of microspheres which break under pressure into fragments which can rupture the protective casing. However there is no teaching about the problem underlying the present invention. The compositions are not anaerobic compositions.

Polymerizable gasketting compositions are known. EP 0 408 317 of Loctite (Ireland) Limited provides a method of forming a gasket *in situ* between two components which comprises injecting into a groove in at least one of said components a curable composition comprising one or more free-radical polymerizable vinyl esters, and ingredients of a rapid free-radical cure system therefor, the cure system being inactivated prior to injection of the composition, and the composition having a viscosity at 25°C in the range from 200 to 500,000 mPas; and permitting the composition to cure *in situ.* A preferred feature of that invention is that the cure system is inactivated prior to injection of the composition by isolating the initiator and the activator from each other prior to injection. The initiator and the activator come into contact with each other at the time of injection and this causes rapid curing of the composition. The possibility of microencapsulation of either the initiator or the activator is mentioned, with subsequent activation by rupturing the microcapsules when cure is required. The problem underlying the present invention is not discussed.

OKS Spezialschmierstoffe GmbH of Munich, Germany sells a microencapsulated adhesive screw locking system OKS 90 which hardens independently of the material to which it is applied and the surface conditions to which it is subjected. The system consists of three components, (i) an epoxy resin binder, (ii) an accelerator and (iii) a cross-linking agent enclosed in microcapsules, which are combined with one another in the product. By pressure and shearing from the screwing action, the microcapsules are destroyed, and the reactants are combined with the resin, thus effecting cure. It simultaneously tightens the structure and prevents corrosion, (CA 120: 193440; Kleben & Dichten Adhaesion (1993), 37 (4), 39-40). Commercial literature from the manufacturer of OKS 90 states that the basis is an epoxy acrylate with microencapsulated accelerator and hardener. Curing begins about 5 minutes after assembly of the two threaded components (at Room Temperature). In use of the OKS 90 system, the microcapsules are destroyed immediately upon screwing-together of the components and the composition is then set up for curing, giving adhesion of both threaded components to each other. The present inventors faced a quite different problem in bringing two plane surfaces together in face-to-face engagement but without causing the sealing composition (which is in contact with both surfaces) to set up until after any necessary adjustments in the relationship between the components had been made.

US Patent 3,996,308 Douek et al. describes a composition which is both anaerobic and pressure-sensitive and which contains a curable anaerobic resin system together with a thermoplastic polymer system, the combination of which alone or upon inclusion of a tackifier constitute a pressure-sensitive adhesive system upon evaporation of essentially all of the solvent present. The composition includes an initiator which is latent until made active by substantial exclusion of oxygen, preferably in combination with a suitable accelerator. Douek et al. state that the peroxy initiator may be encapsulated in microspheres which, upon rupture, and upon the exclusion of oxygen, will initiate cure. However the Examples in the patent do not describe use of an encapsulated initiator. The composition adheres to a variety of surfaces upon contact without the need of more than ordinary finger pressure. It is not a true anaerobic system and there is no teaching concerning the problem solved by the present invention, which is concerned with an anaerobic system alone, not mixed with a presure-sensitive thermoplastic polymer system.

US Patent 4,080,238 Wolinski et al. describes a cold-setting adhesive composition comprising a thermoplastic, non-reactive polyurethane polyer dissolved in an addition-polymerizable combination of an acrylic or methacrylic monomer other than the acids, a copolymerizable monomer containing at least one free carboxylic group, a free-radical addition polymerization catalyst system and an activator for the free-radical catalyst system encapsulated in pressure-rupturable microspheres or beads e.g. an amino activator encapsulated in formaldehyde crosslinked gelatin microspheres. As described in Example 2, the microspheres were crushed by applying finger pressure to plates between which the adhesive dispersion had been coated. Wolinski et al. were not dealing with an anaerobic composition and there is no teaching concerning the problem underlying the present invention.

The contents of all of the above-mentioned prior art references are incorporated herein by reference.

It is an object of the present invention to provide a method of sealing two abutting surfaces using a composition which does not cure significantly on application or when subject to a minimal load i.e. when the components are not 'torqued-down' and which then cures rapidly when the components are torqued-down. A typical torqued-down pressure loading on the two surfaces would vary from 3kg/cm² to 20kg/cm². Thus the objective of the method of this invention is to resist curing under a low load such as 0.1kg/cm² or less but to cure quickly when the load is increased to a high load such as 3kg/cm² and beyond.

In the present application 'torquing-down' refers to the action of bringing two lightly assembled components more closely together in order to facilitate the provision of a competent seal between the surfaces. Even though the words "torquing-down" may suggest a rotational motion, any rotational motion is applicable only to the means for bringing the components more closely together and not to the actual components which are being assembled face to face. Thus the force which is used to rupture the microcapsules is substantially in a direction perpendicular to the faces of the components being sealed and is substantially free of shear, rotational or torsional forces. For example if a threaded tightening mechanism is used to 'torque-down' the components then the mechanism when rotated in the correct direction 'torques-down' the components but the components move substantially in a direction perpendicular to the plane of the surfaces between which a seal is being provided.

The term 'not torqued-down' refers to systems of components and optionally the means for torquing-down being assembled so that the faces between which the seal is being provided are aligned and are in contact with the sealing composition but substantially no force is yet provided by the means for torquing-down. The system is 'lightly assembled'.

### Brief Summary of the Invention

The present invention provides a method of sealing two abutting metal surfaces in face-to-face contact which comprises the steps of:
(i) applying to at least one of the surfaces a sealing composition containing ingredients of a fast-curing anaerobic sealant comprising:
   (a) an anaerobically polymerizable liquid monomer selected from acrylate and methacrylate ester monomers,
   (b) a primary initiator of free-radical polymerization, and
   (c) an accelerator combined with a secondary initiator of polymerization,
   at least one of the primary initiator (b) and the accelerator/secondary initiator combination (c) being isolated from the monomer by microencapsulation in microcapsules having walls capable of withstanding a low load but rupturable under a high load,
(ii) bringing the surfaces into abutting relationship under a low load which does not rupture the microcapsules, the sealing composition being in contact with both metal surfaces under conditions such that a rapid anaerobic cure would be initiated if one of the ingredients (b) or (c) was not microencapsulated,
(iii) making any desired adjustments in the relationship between the two surfaces, and, if desired, holding the two surfaces in the abutting relationship,
(iv) applying high load pressure forces to bring the surfaces together and to rupture the microcapsules, thus achieving a rapid cure of the composition.

The sealing composition is preferably based upon an anaerobic polymerization system in the substantial absence of any other polymerization system.

Preferably the microcapsules have walls capable of withstanding a low pressure load of less than about 0.1 kg/cm² applied to the composition in step (ii) as defined above.

Preferably, also the microcapsules have walls rupturable under a high pressure load greater than about 3.0 kg/cm², preferably from 3.0 to 20 kg/cm², applied to the composition in step (iv) as defined above.

Preferably the primary initiator is microencapsulated. The liquid adhesive/sealant composition is only slowly reactive between metal surfaces while the primary cure initiator is microencapsulated, with minimal viscosity change occurring over a period of 6-8 hours. However when the primary cure initiator is liberated by rupture of the microcapsules it mixes into the liquid composition and fast curing occurs. A fast cure is advantageous because it enables testing of the seal for "blow-out" to be performed in a short time after "torquing-down" of the assembly e.g. from 5 seconds to 1 minute later.

The system can be regarded as a one-part adhesive/sealant because the microcapsules can remain in the liquid for a significant period of time without causing stability problems.

The person skilled in the art will understand that the microcapsule size is determined by reference to the dimensions of any likely undulations or roughnesses in the plane surfaces which are to be sealed together, for example flanges. In general, the user will aim for zero gaps between the surfaces when a high load is applied to the assembly. However hills and valleys, e.g. having a height/depth of 6-8 micrometres, may be present in rough areas of one or both surfaces. In order to ensure that the microcapsules are ruptured in the rough areas, the microcapsule diameter should be at least twice the depth of valleys in the surfaces. Preferably the microcapsules have an average diameter in the range 20 - 100 micrometres.

The microcapsule walls must. be sufficiently hard to withstand the low load in step (ii) of the method as defined above e.g. less 0.1 kg/cm². If one component is placed on top of the other in step (ii), the low load may correspond to the weight of the upper component distributed over the surface area. The microcapsule walls must also be resistant to chemical attack by the ingredients of the composition. Suitable microcapsule materials may be chosen by those skilled in the art and conventional methods of making the microcapsules may be used. Preferably the microcapsule walls are of hard, polymerised material or resin, particularly urea/formaldehyde resin.

The method of the present invention avoids the formation of a "shim" or partly-cured area in the composition when the components are assembled under low load. If a shim were formed, it would be likely to break when the components are torqued-down, leaving a weakness in the final seal between the surfaces. In addition, the method of the invention permits the easy replacement of one component if it is found to be defective before the components are torqued-down. The uncured composition can be cleaned off the satisfactory component and it can be used again, whereas a conventional composition which had set up on the surface could be extremely difficult to remove.

The polymerizable (meth)acrylate ester monomers useful in this invention are such as those given in US Patent 3,218,305 (Krieble), US Patent 4,417,02 (Azevedo), US Patent 4,451,615 (Charnock), US Patent 5,116,558 (Wrobel et. al.), and US Patent 3,996,308 (Douek et al.), the contents of which are incorporated herein by reference. One preferred class of polymerisable monomers is the poly- and mono-functional acrylate and methacrylate esters of the general formulas:

CH₂=C(R).COOR¹ (I)

where R is H, CH₃, C₂H₅ or Cl, and R¹ is C₁₋₈ mono- or bicycloalkyl, a 3 to 8-membered heterocyclic radical with a maximum of 2 oxygen atoms in the ring, H, alkyl, hydroxyalkyl or aminoalkyl where the alkyl portion is C₁₋₈ straight or branched carbon atom chain; and 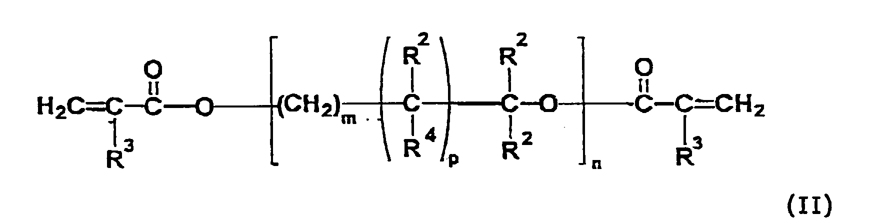 where R² is H, C₁₋₄ alkyl or hydroxyalkyl or -CH₂-O(O=)C-C(R³)=CH₂; R³ is H, halogen or C₁₋₄alkyl; R⁴ is H, OH or -O(O=)C-C(R³)=CH₂; m is an integer from 1 to 8; n is an integer from 1 to 20, and p is 0 or 1.

Other preferred acrylate ester monomers are those selected from the class consisting of urethane acrylates having the general formula:

(CH₂=CR⁵.CO.O.R⁶.O.CO.NH-)₂R⁷ (III)

wherein R⁵ is H, CH₃, C₂H₅ or Cl; R⁶ is (i) a C₁₋₈ hydroxyalkylene or aminoalkylene group, (ii) a C₁₋₆ alkylamino C₁₋₈ alkylene, a hydroxyphenylene, aminophenylene, hydroxynaphthylene or aminonaphthylene optionally substituted by a C₁₋₃ alkyl, C₁₋₃ alkylamino or di-C₁₋₃ alkylamino group; and R⁷ is C₂₋₂₀ alkylene, alkenylene or cycloalkylene, C₆₋₄₀ arylene, alkarylene, aralkarylene, alkyloxyalkylene or aryloxyarylene optionally substituted by 1-4 halogen atoms or by 1-3 amino or mono- or di-C₁₋₃ alkylamino or C₁₋₃ alkoxy groups; or said acrylates having the general formula:

(CH₂=CR⁵.CO.O.R⁶.O.CO.NH.R⁷.NH.CO.X-)ₙR⁸ (IV)

wherein R⁵, R⁶, and R⁷ have the meanings given above; R⁸ is the non-functional residue of a polyamine or a polyhydric alcohol having at least n primary or secondary amino or hydroxy groups respectively; X is 0 or NR⁹ where R⁹ is H or a C₁₋₇ alkyl group; and n is an integer from 2 to 20.

Among the specific monofunctional polymerisable acrylate ester monomers preferred, and which correspond to the above formula I, are hydroxypropyl methacrylate, 2-hydroxyethyl methacrylate, methyl methacrylate, tetrahydrofurfuryl methacrylate, cyclohexyl methacrylate, 2-aminopropyl methacrylate and the corresponding acrylates.

Specific polyfunctional monomers which are preferred and which correspond to formula II above, are polyethyleneglycol mono- and dimethacrylate and dipropylene glycol dimethacrylate.

Other preferred polymerisable acrylate ester monomers useful in the instant invention are selected from the class consisting of the acrylate, methacrylate and glycidyl methacrylate esters of Bisphenol A. The most preferred among all of the free-radical polymerisable monomers mentioned is ethoxylated Bisphenol-A-dimethacrylate.

Mixtures or copolymers of any of the above mentioned free-radical polymerisable monomers can be employed.

Polymerisable vinyl monomers represented by the general formula:

R¹⁰-CH=CH-R¹⁰

where R¹⁰ is alkyl, aryl, alkaryl, aralkyl, alkoxy, alkylene, aryloxy, aryloxyalkyl, alkoxyaryl, or aralkylene, -OO=C-R¹, where R¹ is defined above, can also be effectively employed in the composition with a (meth)acrylate ester monomer.

Copolymers or mixtures of monomers disclosed herein with other compatible monomers are also contemplated.

Primary initiators of free-radical polymerization useful in the instant composition include peroxides, hydroperoxides, peresters, and peracids. Peroxides are preferred and benzoyl peroxide is the most preferred. Such primary initiators are generally present in the sealant composition in the amounts of about 0.1% to about 15% by weight of the composition, and preferably about 0.1% to about 2.0% by weight.

A typical microcapsule contains from 5 to 10% by weight of pure primary initiator. The remainder of the weight of the microcapsule is usually due to the presence of an inert filler such as calcium phosphate. The preferred content of microcapsules is at least 3% by weight of the composition and preferably in the range 4 - 15% by weight. The amount of primary initiator encapsulated is at least 0.15% by weight of the composition and preferably in the range 0.2 - 1.5% by weight. In general the amount of microcapsules used is chosen to ensure that sufficient numbers of microcapsules are ruptured to release at least that amount of primary initiator required to effect rapid cure.

A primary and secondary initiator system is as illustrated in the examples below. The primary and secondary initiator system consists of a primary initiator and secondary initiator, the primary initiator in the presence of the accelerator being capable of causing rapid curing as compared to the secondary initiator (or co-initiator). The secondary initiator may be a less active peroxide, more particularly a hydroperoxide. If as in the examples below the primary initiator (e.g. benzoyl peroxide) is encapsulated and the secondary or co-initiator (e.g. cumene hydroperoxide) is present as part of the accelerator content of the composition then the composition cures very slowly, with minimal viscosity change occurring and no significant adhesive strength being measurable over a period of 6 to 8 hours. On release of the primary initiator from the microcapsules by rupturing, then the primary initiator effects rapid cure. On release of the primary initiator the secondary initiator is then effectively a co-initiator, and the cure speed of the composition may be enhanced (by a synergistic effect between both initiators).

In the anaerobic systems described in the examples below the secondary initiator (cumene hydroperoxide) initiates very slow curing due to the absence of saccharin. On release of the primary initiator (benzoyl peroxide), the secondary initiator then acts as a co-initiator.

Commonly known accelerators of polymerization include amines and sulfimides. Tertiary amines, such as N,N-dimethylparatoluidine, N,N-dimethylorthotoluidine, N,N-diethylparatoluidine and/or N,N-diethylorthotoluidine, and sulfimides such as 3-oxo-2,3-dihydrobenz-[d]isothiazole-1,1-dioxide, commonly known as saccharin, are particularly useful (subject to the qualification in the preceding paragraph). Other suitable accelerators are organometallic compounds, preferably organometallic polymers containing a metallocene moiety such as a ferrocene moiety. Suitable metallocenes in related compositions are disclosed more fully in U.S. Patent 3,855,040. The accelerators are preferably added to the monomer in amounts of about 0.01% to about 2.5% by weight of the composition. A secondary initiator or co-initiator is present as part of the accelerator content, the amount of secondary initiator suitably being in the range from about 0.09% to about 3.0% by weight of the composition. Other metallo-containing materials which are non-polymeric have also been found to be effective.

Inhibitors and chelators, well recognised in the art for imparting stability to polymerizable compositions, are recommended. Those inhibitors useful in the present composition are usually selected from the group consisting of hydroquinones, benzoquinones, naphthoquinones, phenanthraquinones, anthraquinones, and substituted compounds of any of these. Among the chelators which may be optionally present in the adhesive composition are the beta-diketones, ethylenediamine tetraacetic acid (EDTA) and the sodium salt of EDTA. Both the inhibitors and chelators may be effectively employed in levels of about 0.1 to about 1% by weight of the monomer, without adversely affecting the speed of cure of the polymerizable adhesive/sealant composition.

Thickeners, plasticizers, pigments, dyes, diluents, fillers, and other agents common in the art can be employed in any reasonable manner to produce desired functional characteristics, providing they do not significantly interfere with polymerization of the monomer.

### Description of the Preferred Embodiments

The invention is illustrated in the following examples, in which all parts are parts by weight.

### Example 1

A model system is used consisting of anaerobic monomer, accelerator and stabiliser which has been thickened with silica. Benzoyl peroxide microencapsulated in a urea/formaldehyde shell is used as the primary initiator in this and the subsequent examples. The methacrylate monomer comprises polyethylene glycol (200) mono methacrylate. The cure accelerator comprises N,N-diethyl-p-toluidine (0.9 parts) and N,N-dimethyl-o-toluidine (0.3 parts) combined with cumene hydroperoxide (2.0 parts) as the secondary initiator.

| Ingredient | Parts by Weight |
|---|---|
| Methacrylate Monomer | 93.9 |
| Cure Accelerator | 3.2 |
| Silica Thickener | 1.0 |
| Microencapsulated Cure Initiator | 5.0 |

This system does not cure when placed between flat metal surfaces in abutting relationship at loads of ≤ 0.1kg/cm². This lasts for periods of up to 6 hours without any significant change in viscosity. However when the load is increased to 5kg/cm² rapid cure takes place. This behaviour is the same on mild steel or aluminium surfaces. The cure performance is summarised in Table 1 below for loads of 0.1 and 5.0 kg/cm². The results are measured on Solvent Wiped Aluminium lap shears as tensile shear strengths after the cure times quoted.

**Table 1**

| Tensile Shear Strengths | | |
|---|---|---|
| Time | Load | |
| | 0.1kg/cm² | 5.0 kg/cm² |
| 1 hour | 0 | 0.3 N/mm² |
| 7 hours | 0 | 2.1 N/mn² |

### Example 2

In this case the formulation is based on an anaerobic flange sealant. Again 5% by weight of benzoyl peroxide microcapsules with a urea/formaldehyde shell are used as the primary initiator. The fomulation is compared with its equivalent fully anaerobic product (i.e. in which the initiator is not microencapsulated).

The methacrylate monomer comprises polyethylene glycol (200) mono methacrylate. The stabilizer comprises naphthoquinone (0.28 parts) and EDTA (0.12 parts). The polymeric fillers and thickeners comprise PTFE (7.0 parts), polyethylene powder (6.0 parts), PVA (15.0 parts), Decanol (8.0 parts), polyglycol ester (9.0 parts), pigments (1.7 parts). The cure accelerators comprise N,N-diethyl-p-toluidine (0.9 parts) and N,N-dimethyl-o-toluidine (0.3 parts) with cumene hydroperoxide (0.7 parts) as the secondary initiator.

| Ingredient | Parts by Weight |
|---|---|
| Methacrylate Monomer | 46 |
| Stabilisers | 0.4 |
| Polymeric Fillers and Thickeners | 46.7 |
| Cure Accelerators | 1.9 |
| Silica | 3.0 |
| Microencapsulated Cure Initiator | 5.0 |

The load bearing capability is similar to that in Example 1. The composition does not cure when placed between flat metal surfaces in abutting relationship at loads of ≤ 0.1 kg/cm². When the load is increased the product cures quickly to give adhesive strengths comparable to the conventional anaerobic product. The product was also evaluated on an aluminium flange test rig where it was cured by a load of 5.0 kg/cm² and then submitted to a seal test which proved to be positive.

The results of cure testing similar to that of Example 1 is shown in Table 2.

**Table 2**

| Tensile Shear Strengths | | | |
|---|---|---|---|
| Time/Load | | | |
| | 1 hour/0.1 kg/cm² | 6 hours/0.1 kg/cm² | 1 hour/5.0kg/cm² |
| Example 2 formulation | 0 | 0 | 3.0 N/mm² |
| Anaerobic product | 0.4 N/mm² | 3.0 N/mm² | 4.0 N/mm² |

### Example 3

This example differs from the Examples 1 and 2 in that a different cure accelerator is used, namely n-butyl ferrocene. This is an example of a metallocene and is used in combination with cumene hydroperoxide (secondary initiator). Microencapsulated benzoyl peroxide is used as the primary initiator (as in Examples 1 and 2).

| Ingredient | Parts by Weight |
|---|---|
| Polyethylene glycol dimethacrylate | 96.95 |
| n-butyl ferrocene | 0.05 |
| Naphthoquinone-based stabiliser | 0.1 |
| EDTA-based stabiliser | 0.4 |
| Silica Thickener | 1.0 |
| Cumene Hydroperoxide | 2.0 |
| Microencapsulated Cure Initiator | 5.0 |

This system does not cure when placed between flat metal surfaces in abutting relationship at loads of ≤0.1kg/cm². This lasts for periods in excess of 6 hours as before. However when the load is increased to 5kg/cm² rapid cure takes place. After 6 hours at 5kg/cm² the cure is virtually complete. This behaviour is the same on mild steel or aluminium surfaces. The cure performance is summarised in Table 3 below for loads of 0.1 and 5.0 kg/cm².

**Table 3**

| Time | Load | |
|---|---|---|
| | 0.1kg/cm² | 5.0kg/cm² |
| 1 hour | 0 | 0.75 N/mm² |
| 6 hours | 0 | approx. 2.0 N/mn² |

The results are measured on Solvent Wiped Aluminium lap shears as tensile shear strengths after the cure times quoted.

### Example 4

This example differs from the Examples 1, 2 and 3 in that a different monomer is used in combination with n-butyl ferrocene. Microencapsulated benzoyl peroxide is used as the primary initiator as in Examples 1 and 2.

| Ingredient | Parts by Weight |
|---|---|
| Ethoxylated Bisphenol A Dimethacrylate | 96.95 |
| n-Butyl ferrocene | 0.05 |
| Naphthoquinone-based stabiliser | 0.1 |
| EDTA-based stabiliser | 0.4 |
| Silica Thickener | 1.0 |
| Maleic Acid | 0.1 |
| Cumene Hydroperoxide | 2.0 |
| Microencapsulated Cure Initiator | 5.0 |

This system does not cure when placed between flat metal surfaces in abutting relationship at loads of ≤0.1kg/cm². This lasts for periods in excess of 6 hours. However when the load is increased to 5kg/cm² rapid cure takes place. This behaviour is the same on mild steel or aluminium surfaces. The cure performance is summarised in Table 4 below for loads of 0.1 and 5.0 kg/cm².

**Table 4**

| Time | Load | |
|---|---|---|
| | 0.1kg/cm² | 5.0kg/cm² |
| 1 hour | 0 | 0.4 N/mm² |
| 6 hours | 0 | approx. 2.0 N/mn² |

The results are measured on Solvent Wiped Aluminium lap shears as tensile shear strengths after the cure times quoted.

## Claims

1. A method of sealing two abutting metal surfaces in face-to-face contact which comprises the steps of:
(i) applying to at least one of the surfaces a sealing composition containing ingredients of a fast-curing anaerobic sealant comprising:
(a) an anaerobically polymerizable liquid monomer selected from acrylate and methacrylate ester monomers,
(b) a primary initiator of free-radical polymerization, and
(c) an accelerator combined with a secondary initiator of polymerization,
at least one of the primary initiator (b) and the accelerator/secondary initiator combination (c) being isolated from the monomer by microencapsulation in microcapsules having walls capable of withstanding a low load but rupturable under a high load,
(ii) bringing the surfaces into abutting relationship under a low load which does not rupture the microcapsules, the sealing composition being in contact with both metal surfaces under conditions such that a rapid anaerobic cure would be initiated if one of the ingredients (b) or (c) was not microencapsulated,
(iii) making any desired adjustments in the relationship between the two surfaces, and, if desired, holding the two surfaces in the abutting relationship,
(iv) applying high load pressure forces to bring the surfaces together and to rupture the microcapsules, thus achieving a rapid cure of the composition.

2. A method according to claim 1 wherein the microcapsules have walls capable of withstanding a low load of less than about 0.1 kg/cm² applied to the composition in step (ii) as defined in claim 1.

3. A method according to claim I or 2 wherein the microcapsules have walls rupturable under a load greater than about 3.0 kg/cm² applied to the composition in step (iv) as defined in claim 1.

4. A method according to claim 1 wherein the microcapsules have an average diameter in the range 20-100 micrometres.

5. A method according to claim wherein the microcapsule walls are of hard polymerised material or resin.

6. A method according to claim 5 wherein the microcapsule walls are of urea/formaldehyde resin.

7. A method according to claim 1 wherein the primary initiator is microencapsulated and is selected from peroxides, hydroperoxides, peresters and peracids.

8. A method according to claim 1 wherein the secondary initiator is cumene hydroperoxide.

9. A method according to claim 1 wherein the two surfaces are flanges.

10. A method according to claim 1 wherein the surfaces are brought together in step (ii), as defined in claim 1, by movement in a direction substantially perpendicular to the surfaces.
